# EUROPÄISCHE PATENTANMELDUNG

(11) **EP 4 213 050 A1**
(43) Veröffentlichungstag der Anmeldung: **19.07.2023**
(21) Anmeldenummer: 22151152.0
(22) Anmeldetag: 12.01.2022
(51) Int. Cl.: G06F 21/53, G06F 21/57, H04L 9/40, G06F 21/51

(54) **AUTOMATISCHE, SICHERHEITSBEDINGTE VERLAGERUNG MINDESTENS EINER CONTAINERINSTANZ**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Verfahren und Vorrichtung zur automatischen, sicherheitsbedingten Verlagerung mindestens einer Containerinstanz (11) in einer orchestrierten Umgebung (10), die mehr als einen, von einer Orchestrierungseinrichtung (16) verwalteten Gastrechner aufweist, umfassend die Schritte
- Starten (S1) der Containerinstanz (11) auf einem ersten Gastrechner, der Sicherheitsfunktionen entsprechend einer ersten Sicherheitsstufe umfasst, durch die Orchestrierungseinrichtung (16),
- Empfangen (S2) einer Sicherheitsalarmmeldung (20) umfassend mindestens einen Kritikalitätsparameter (K), der einen Sicherheitszustand der orchestrierten Umgebung (10) angibt, von einer Überwachungseinrichtung (17) in der Orchestrierungseinrichtung (16),
- Ermitteln (S3) einer von der ersten Sicherheitsstufe unterschiedlichen zweiten Sicherheitsstufe für die Containerinstanz (11) anhand einer Verlagerungsrichtlinie abhängig von dem Kritikalitätsparameter (K) durch die Orchestrierungseinrichtung (16),
- Verlagern (S4) der Containerinstanz (11) auf einen zweiten Gastrechner der orchestrierten Umgebung, der Sicherheitsfunktionen entsprechend der zweiten Sicherheitsstufe umfasst durch die Orchestrierungseinrichtung (16).

## Beschreibung

Die Erfindung betrifft Verfahren zur automatischen, sicherheitsbedingten Verlagerung mindestens einer Containerinstanz in einer orchestrierten Umgebung, die mehr als einen Gastrechner mit unterschiedlichen Sicherheitsfunktionen umfasst und von einer Orchestrierungseinrichtung verwaltet werden.

Containervirtualisierung ist eine Methode, bei der mehrere Instanzen eines Betriebssystems isoliert voneinander einen Betriebssystemkern eines Gastrechners nutzen können. Software Container, im Weiteren kurz Container genannt, stellen somit eine leichtgewichtige Art der Virtualisierung einer Laufzeitumgebung auf einem Gastrechner, auch Hostsystem genannt, dar und kapseln eine in einem Container betriebene Software-Anwendung vom darunterliegenden Gastrechner ab. Software-Anwendungen werden mittlerweile in vielen Bereichen durch den Einsatz von Container-Technologie implementiert, beispielsweise in der Industrieautomation und der Prozesssteuerung, aber auch in Transportsystemen oder der Gebäudeautomatisierung.

Um einen Container auf dem Gastrechner starten zu können, wird ein Containerimage benötigt, welches neben dem Anwendungssoftware auch die für die Anwendungssoftware erforderlichen Binärprogramme und Bibliotheken enthält. Aus dem Containerimage wird auf dem Gastrechner ein Container, genauer eine Containerinstanz, erstellt und auf der Laufzeitumgebung des Gastrechners ausgeführt. Eine orchestrierte Laufzeitumgebung umfasst einen Orchestrierer und mindestens ein, meist eine Vielzahl von Gastrechner, die dem Orchestrierer zugeordnet sind. Der Orchestrierer startet, verwaltet und beendet Containerinstanzen auf den zugeordneten Gastrechnern.

Bei orchestrierten Laufzeitumgebungen, vor allem im Cloudbasierten Umfeld, gibt es mehrere Möglichkeiten zur Auswahl der Zielplattform, d.h. des Gastrechners, auf dem eine Containerinstanz ausgeführt wird. Orchestrierte Containerinstanzen können beispielsweise auf mit anderen Kunden geteilten Container as a Service Plattformen betrieben werden. Dabei könne darunterliegende Gastrechner von mehreren Orchestrierern angesprochen wird. Der Orchestrierer sieht in diesem Fall die darunterliegenden Gastrechner nicht, diese sind völlig transparent. Orchestrierte Containerinstanzen können auch auf dediziert einem Kunden zur Verfügung stehenden physisch vorliegenden oder virtuellen Hostsystem betrieben werden, welche selbständig vom Kunden gemanagt werden.

Die unterschiedlichen Zielplattformen können unterschiedlich gegen Angriffe und ungewollte Manipulation abgesichert sein. Beispielsweise kommen auf hochgesicherten Hostsysteme Integritätsüberwachungslösungen, Host-Based Intrusion Detection Systeme oder File-Integrity-Monitoring zum Einsatz. Auf weniger abgesicherte Hostsystemen sind nur Teile der genannten Überwachungslösungen implementiert. Eine unterschiedliche Absicherung kann auch dadurch gegeben sein, dass die gleichen Überwachungslösungen im Einsatz sind, jedoch unterschiedlich restriktiv auf den unterschiedlichen Plattformen eingesetzt werden bzw. auch die gleichen Lösungen eine weniger restriktive Konfiguration aufweisen können. Weniger abgesicherte Hostsysteme erfordern somit weniger Ressourcen, wie beispielsweise implementierte Sicherheitsfunktionen und Rechenkapazität, und verursachen geringere Betriebskosten.

Daher ist es oftmals wünschenswert, nicht sämtliche Containerinstanzen dauerhaft auf hochgesicherten Hostsystemen in einer orchestrierten Umgebung zu betreiben, sondern zur Ressourcenoptimierung und Vermeidung von Kosten die von dem Orchstrierer verwalteten Containerinstanzen auf unterschiedlich gesicherten Hostsystemen zu betreiben und somit unterschiedlich stark zu schützen. Durch Angriffe auf Hostsysteme oder neu erkannte Sicherheitslücken ändert sich die Angreifbarkeit der Hostsysteme. Hierdurch entsteht das Problem, dass Containerinstanzen auf wenig geschützten Hostsystemen dauerhaft nicht ausreichend geschützt sind.

Es ist somit eine Aufgabe der vorliegenden Erfindung, ein Verfahren zu schaffen mit dem Containerinstanzen auf Ressourcen-optimierten und somit auf wenig geschützten Hostsystemen einer orchestrierten Umgebung die unterschiedlich geschützten Hostsysteme umfasst, betrieben werden können, und dennoch die Ausführung der Containerinstanz dauerhaft ausreichend geschützt ist.

Insbesondere ist es eine Aufgabe der vorliegenden Erfindung eine Lösung zu schaffen, die es ermöglicht abhängig vom Zustand des Zielknotens oder der darauf betriebenen Containerinstanz die Containerinstanz temporär auf der für sie vorgesehenen Laufzeitumgebung zu stoppen und auf einem besser abgesicherten System zu betreiben.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur automatischen, sicherheitsbedingten Verlagerung mindestens einer Containerinstanz in einer orchestrierten Umgebung, die mehr als einen, von einer Orchestrierungseinrichtung verwalteten Gastrechner aufweist, umfassend die Schritte
- Starten der Containerinstanz auf einem ersten Gastrechner, der Sicherheitsfunktionen entsprechend einer ersten Sicherheitsstufe umfasst, durch die Orchestrierungseinrichtung,
- Empfangen einer Sicherheitsalarmmeldung umfassend mindestens einen Kritikalitätsparameter, der einen Sicherheitszustand der orchestrierten Umgebung angibt, von einer Überwachungseinrichtung in der Orchestrierungseinrichtung,
- Ermitteln einer von der ersten Sicherheitsstufe unterschiedlichen zweiten Sicherheitsstufe für die Containerinstanz anhand einer Verlagerungsrichtlinie abhängig von dem Kritikalitätsparameter durch die Orchestrierungseinrichtung,
- Verlagern der Containerinstanz auf einen zweiten Gastrechner der orchestrierten Umgebung, der Sicherheitsfunktionen entsprechend der zweiten Sicherheitsstufe umfasst durch die Orchestrierungseinrichtung.

Die orchestrierte Umgebung umfasst Gastrechner mit unterschiedlichen Sicherheitsstufen, d.h. mindestens einer ersten und einer zweiten Sicherheitsstufe. Durch die Sicherheitsalarmmeldung, die von der Überwachungseinrichtung gesendet und in der Orchestrierungseinrichtung empfangen wird, erhält die Orchestrierungseinrichtung dynamisch eine Information zur Sicherheitszustand in den Gastrechnern der orchestrierten Umgebung und der ausgeführten Containerinstanz. Die Orchestrierungseinrichtung kann durch die Verlagerungsrichtlinie gezielt mit einer Verlagerung der Containerinstanz darauf reagieren. So kann die Containerinstanz auf dem Gastrechner mit der ersten Sicherheitsstufe sicher ausgeführt werden und wird lediglich bei einer veränderten Sicherheitszustand auf den zweiten Gastrechner mit höherer zweiter Sicherheitsstufe verlagert. Die zweite Sicherheitsstufe kennzeichnet einen gegenüber der ersten Sicherheitsstufe höheren Schutzumfang. Es werden somit Ressourcen an Rechenkapazität, Funktionalität optimiert und somit auch Betriebskosten eingespart.

Der Kritikalitätsparameters gibt ein Maß für die Sicherheitszustand an und ermöglicht zusammen mit der Verlagerungsrichtline eine differenzierte, an den Sicherheitszustand angepasste Verlagerung der Containerinstanz.

In einer vorteilhaften Ausführungsform ist die erste Sicherheitsstufe als eine Standard-Sicherheitsstufe der Containerinstanz in der Verlagerungsrichtlinie und/oder in einer Bereitstellungsinformation der Containerinstanz zugeordnet.

Die Standard-Sicherheitsstufe wird bevorzugt durch einen Benutzer der Containerinstanz in der Bereitstellungsinformation und/oder der Verlagerungsinformation der Containerinstanz bereitgestellt. Die Bereitstellungsinformation umfasst Angaben, insbesondere Ressourcen, Privilegien und des Weiteren, die beim Start der Containerinstanz zugewiesen werden. Durch ein Bereitstellen der ersten Sicherheitsstufe bzw. der Standard-Sicherheitsstufe als Bestandteil der Bereitstellungsinformation oder der Verlagerungsrichtlinie wird jede Containerinstanz beim erstmaligen Starten auf dem Gastrechner mit der Sicherheitsstufe entsprechend der zugewiesenen Standard-Sicherheitsstufe gestartet. Dies ermöglicht ab dem initialen Start eine Ressourcen-optimierte Ausführung der Containerinstanz.

In einer vorteilhaften Ausführungsform wird die Sicherheitsalarmmeldung dann von der Überwachungseinrichtung an die Orchestrierungseinrichtung gesendet, wenn ein sicherheitskritisches Ereignis abhängig von mindestens einer Überwachungsnachricht, die von mindestens einem Gastrechner der orchestrierten Umgebung und/oder von der Containerinstanz in der Überwachungseinrichtung empfangen wird, identifiziert wird.

Somit werden unterschiedliche, von den Überwachungsnachrichten abhängige sicherheitskritische Ereignisse erkannt und automatisch an die Orchestrierungseinrichtung gemeldet. Bevorzugterweise werden die Überwachungsnachrichten zur Laufzeit von dem Gastrechner übertragen, sodass die Sicherheitsalarmmeldung zeitnah zum identifizierten sicherheitskritischen Ereignis erzeugt und in der Orchestrierungseinrichtung empfangen und umgesetzt werden kann.

In einer vorteilhaften Ausführungsform wird der Kritikalitätsparameter abhängig von dem sicherheitskritischen Ereignis und einer Sicherheitsrichtlinie in der Überwachungseinrichtung ermittelt.

Durch den Kritikalitätsparameter können unterschiedliche sicherheitskritische Ereignisse anhand von Vorgaben aus der Sicherheitsrichtlinie zusammengefasst werden.

In einer vorteilhaften Ausführungsform wird das sicherheitskritische Ereignis und/oder der Kritikalitätsparameter durch ein maschinelles Lernverfahren ermittelt.

Somit kann die Alarmierung der Orchestrierungseinrichtung automatisch an beispielsweise ein geändertes Verhalten der Gastrechner und entsprechend geänderte Überwachungsnachrichten von den Gastrechnern angepasst werden.

In einer vorteilhaften Ausführungsform umfasst die Verlagerungsrichtlinie für jeden Kritikalitätsparameter mindestens eine der folgenden Angaben:
- mindestens eine Containerinstanz und/oder mindestens ein Containerinstanz-Typ und/oder eine Container-basierte Anwendung, die verlagert werden,
- mindestens eine erlaubte zweite Sicherheitsstufe oder mindestens eine nicht-erlaubte zweite Sicherheitsstufe, die der zweite Gastrechner aufweisen muss.

Somit werden durch die Verlagerungsrichtlinie flexibel die zu verlagernden Containerinstanzen sowie die zweite Sicherheitsstufe des Ziel-Gastrechner festgelegt.

In einer vorteilhaften Ausführungsform umfasst die Verlagerungsrichtlinie für jeden Kritikalitätsparameter eine Zeitdauer, nach deren Ablauf die mindestens eine Containerinstanz vom zweiten Gastrechner auf einen Gastrechner mit der Standard-Sicherheitsstufe zurückverlagert wird oder auf einen Gastrechner mit einer in der Verlagerungsrichtlinie angegebenen dritten Sicherheitsstufe verlagert wird.

Somit kann die Verweildauer der mindestens einen verlagerten Containerinstanz auf dem zweiten Gastrechner flexibel an die Kritikalität bzw. den Sicherheitszustand der orchestrierten Umgebung angepasst werden. Dies erhöht die Effizienz der Ressourcenoptimierung.

In einer vorteilhaften Ausführungsform wird die Zeitspanne bei einem Empfangen einer weiteren Sicherheitsalarmmeldung abhängig von einem in der weiteren Sicherheitsalarmmeldung enthaltenen weiteren Kritikalitätsparameters angepasst.

Somit kann die Verweildauer der mindestens einen verlagerten Containerinstanz an weitere nachfolgende Sicherheitsalarmmeldung angepasst werden.

In einer vorteilhaften Ausführungsform wird nach Empfang von mindestens einem vordefinierten Sicherheitsereignis in der Orchestrierungseinrichtung, die mindestens eine Containerinstanz vom zweiten Gastrechner auf einen Gastrechner mit der Standard-Sicherheitsstufe zurückverlagert wird oder auf einen Gastrechner mit einer in der Verlagerungsrichtlinie angegebenen dritten Sicherheitsstufe verlagert.

Somit wird eine Ereignis-gesteuerte Rückverlagerung von Containerinstanzen ermöglicht.

In einer vorteilhaften Ausführungsform ist das mindestens eine vordefinierte Sicherheitsereignis ein Schwachstellenwert, der in der Überwachungseinrichtung von mindestens einer Sicherheitsfunktion des zweiten Gastrechners empfangen und an die Orchestrierungseinrichtung übermittelt wird.

Somit kann die Sicherheitsfunktion in den zweiten Gastsystemen zur Ermittlung der Verweildauer verwendet werden.

In einer vorteilhaften Ausführungsform umfasst das Verlagern der Containerinstanz ein Stoppen der Containerinstanz auf dem ersten Gastrechner und anschließend ein Starten der Containerinstanz auf dem zweiten Gastrechner.

In einer vorteilhaften Ausführungsform wird das Verlagern der Containerinstanz unterbrechungsfrei durch ein Gastrechner-übergreifendes Prozessverlagerungsverfahren ausgeführt.

Somit ist ein kontinuierliches Ausführen der Containerinstanz gewährleistet.

Gemäß einem zweiten Aspekt betrifft die Erfindung eine Vorrichtung zur automatischen, sicherheitsbedingten Verlagerung mindestens einer Containerinstanz in einer orchestrierten Umgebung, die mehr als einen, von einer Orchestrierungseinrichtung verwalteten Gastrechner aufweist, umfassend die Orchestrierungseinrichtung und eine Überwachungseinrichtung, die derart ausgebildet sind die nachfolgenden Schritte auszuführen:
- Starten der Containerinstanz auf einem ersten Gastrechner, der Sicherheitsfunktionen entsprechend einer ersten Sicherheitsstufe umfasst, durch die Orchestrierungseinrichtung,
- Empfangen einer Sicherheitsalarmmeldung umfassend mindestens einen Kritikalitätsparameter, der einen Sicherheitszustand der orchestrierten Umgebung angibt, von einer Überwachungseinrichtung in der Orchestrierungseinrichtung,
- Ermitteln einer von der ersten Sicherheitsstufe unterschiedlichen zweiten Sicherheitsstufe für die Containerinstanz anhand einer Verlagerungsrichtlinie abhängig von dem Kritikalitätsparameter durch die Orchestrierungseinrichtung, und
- Verlagern der Containerinstanz auf einen zweiten Gastrechner der orchestrierten Umgebung, der Sicherheitsfunktionen entsprechend der zweiten Sicherheitsstufe umfasst durch die Orchestrierungseinrichtung.

Die Vorrichtung weist die gleichen Vorteile wie das Verfahren auf.

In einer Ausführungsform sind die Orchestrierungseinrichtung und die Überwachungseinrichtung integriert in einer Vorrichtung ausgebildet oder wobei die Orchestrierungseinrichtung und die Überwachungseinrichtung als physisch getrennte Vorrichtungen ausgebildet sind, die über eine externe Kommunikationsverbindung Sicherheitsalarmmeldungen und/oder Sicherheitsereignisse übermitteln.

Eine integrierte Vorrichtung weist gegenüber einer physisch getrennten Vorrichtung eine höhere Ausfallsicherheit auf, da keine externen Ressourcen für die externe Kommunikationsverbindung benötigt werden. Bei physisch getrennten Vorrichtungen können eine bereits vorhandene Orchestrierungsvorrichtung und/oder eine bereits vorhandene Überwachungseinrichtung weiterverwendet und lediglich mit den jeweils erfindungsgemäßen Funktionen erweitert werden.

Ein dritter Aspekt der Erfindung betrifft ein Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens durchzuführen.

Sofern es in der nachfolgenden Beschreibung nicht anders angegeben ist, beziehen sich die Begriffe "starten", "empfangen", "ermitteln", "verlagern" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliege können, beispielsweise als elektrische Impulse.

Die Vorrichtung und darin optional enthaltene Komponenten, wie beispielsweise die Orchestrierungseinrichtung und die Überwachungseinrichtung und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Speichermedium, wie zum Beispiel einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: ein erstes Ausführungsbeispiel der erfindungsgemäßen Vorrichtung in einem Anwendungsszenario mit orchestrierter Umgebung in schematischer Darstellung;
- Fig. 2: ein Ausführungsbeispiel des erfindungsgemäßen Verfahrens als Flussdiagramm;
- Fig. 3: eine beispielhafte Ausführungsform einer erfindungsgemäßen Sicherheitsalarmmeldung; und
- Fig. 4: ein zweites Ausführungsbeispiel des erfindungsgemäßen Verfahrens beispielhaft ausgeführt durch die in Fig. 2 dargestellte erfindungsgemäße Vorrichtung als Ablaufdiagramm.

Einander entsprechende Teile sind in allen Figuren mit den gleichen Bezugszeichen versehen.

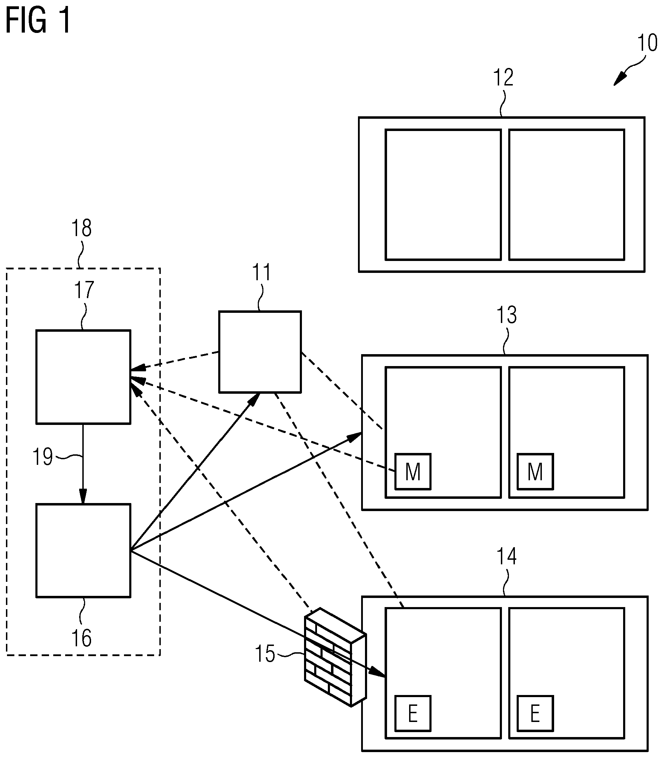

Fig. 1 zeigt eine orchestrierte Laufzeitumgebung, hier kurz als orchestrierte Umgebung 10 bezeichnet, sowie eine Orchestrierungseinrichtung 16 und eine Überwachungseinrichtung 17, die gemeinsam eine Vorrichtung 18 zur automatischen Verlagerung einer Containerinstanz 11 ausbilden.

Die orchestrierte Umgebung 10 umfasst verschiedenartig gesicherte Gastrechner 12, 13, 14, die jeweils unterschiedliche Sicherheitsfunktionen aufweisen. Jedem Gastrechner 12, 13, 14 ist eine Sicherheitsstufe entsprechend den seinen unterstützten Sicherheitsfunktionen zugeordnet. Die orchestrierte Umgebung 10 kann einen oder auch mehrere Gastrechner je Sicherheitsstufe umfassen. In Fig. 1 in verschiedenen Gruppen von Gastrechnern mit gleicher Sicherheitsstufe dargestellt.

Der Gastrechner 12 weist wenige Sicherheitsfunktionen auf und hat somit eine niedrige Sicherheitsstufe. Der Gastrechner 12 ist beispielsweise eine Container as a Service Plattform, auf der Containerinstanzen von unterschiedlichen Kunden ausgeführt werden. Der Gastrechner 13 mit einer mittleren Sicherheitsstufe ist beispielsweise eine eigenständige virtuelle Maschine, die eine Dateiintegritätsüberwachungsfunktion, auch File Integrity Monitoring genannt, und Komponenten für ein Containerlaufzeit-Schwachstellenüberwachungsfunktion, auch Container-Runtime-Schwachstellen-Scanning bezeichnet, umfasst. Die genannten Sicherheitsfunktionen können jedem einzelnen Gastrechner 13 oder auch gemeinsam von einer Gruppe von Gastrechnern 13 genutzt werden. Der Gastrechner 14 mit hoher Sicherheitsstufe ist beispielsweise eine virtuelle Maschine aus einer Gruppe von virtuellen Maschinen, die definierte Prozesse innerhalb der Containerinstanz mit Hilfe eines Unterbindungsfunktion, auch Enforcer genannt, unterbindet und zusätzlich durch eine installierte Firewall 15 dedizierte Datenverbindungen blockiert und/oder im Gegensatz zu den geringer gesicherten Gastrechnern 12, 13 erlaubte Datenverbindungen bzw. Datenkommunikation mit Hilfe einer Layer-7-Firewall-Funktionalität analysiert und durch Vorschriften regelt.

Jeder Gastrechner 12, 13, 14 sowie weitere Komponenten, wie beispielsweise die Firewall 15, und auch die Containerinstanz 11 übermittelt Überwachungsnachrichten, auch als Logs bezeichnet, insbesondere zu Sicherheits-relevanten Ereignissen an die Überwachungseinrichtung 17. Die Überwachungseinrichtung 17 ist derart ausgebildet die Überwachungsnachrichten, in Fig. 1 durch einen gestrichelten Pfeil dargestellt, zu empfangen.

Die Orchestrierungseinrichtung 16 ist derart ausgebildet einen der Gastrechner 12, 13, 14 als Zielplattform für eine Containerinstanz 11 auszuwählen und die Ausführung der Containerinstanz auf dem ausgewählten Gastrechner zu starten und zu stoppen. Herkömmlicherweise ist die Orchestrierungseinrichtung 16 lediglich dazu ausgebildet die Containerinstanz 11 zu stoppen und zu starten, sofern diese ausfällt, oder die Anzahl von gestarteten Containerinstanzen 11 aufgrund eines geänderten Anfragevolumens zu skalieren. Beim Skalieren werden abhängig vom geänderten Anfragevolumen weitere Containerinstanzen 11 gestartet oder eine Teilmenge der gestarteten Containerinstanzen 11 gestoppt.

Die Containerinstanz 11 kann alleine oder im Zusammenspiel mit weiteren unterschiedlichen Containerinstanzen beispielsweise ein Anwendungsprogramm ausführen. Containerinstanzen können von unterschiedlichem Typ sein, wobei beispielsweise Containerinstanzen, die aus einem jeweils unterschiedlichen Containerabbildern erstellt sind, jeweils einen Containertyp bilden oder Containerinstanzen mit einem anderen gemeinsamen Merkmal jeweils einen Containertyp bilden.

Die Überwachungseinrichtung 17 kann als eigenständige, ausgelagerte Komponente ausgebildet sein, die durch eine externe Kommunikationsverbindung 19 mit der Orchestrierungseinrichtung 16 verbunden ist. Alternativ sind die Orchestrierungseinrichtung 16 und die Überwachungseinrichtung 17 als eine integrierte Vorrichtung ausgebildet. Die Überwachungseinrichtung 17 kann auch als eine zusätzliche Komponente der Orchestrierungseinrichtung 16 ausgebildet sein.

Die Überwachungseinrichtung 17 und die Orchestrierungseinrichtung 16 der Vorrichtung 18 sind derart ausgebildet, das nachfolgend beschriebene Verfahren durchzuführen.

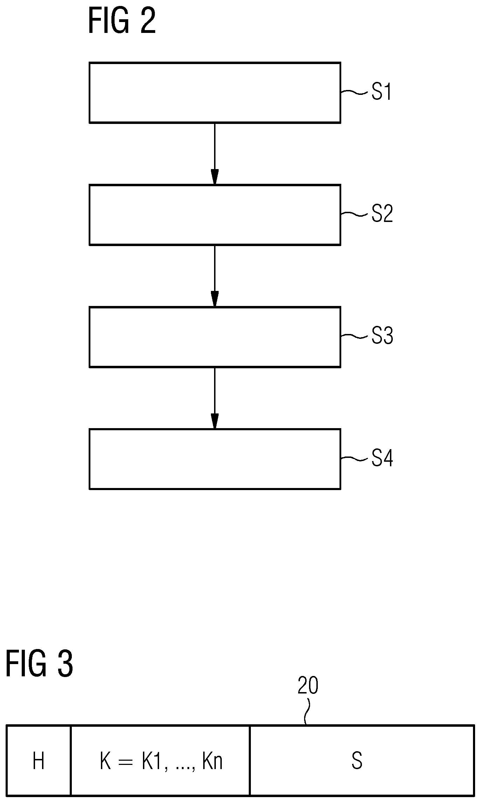

Das erfindungsgemäße Verfahren wird nun anhand des Ablaufdiagramms in Fig. 2 basierend auf dem in Fig. 1 dargestellten Anwendungsszenarios beschrieben.

In einem ersten Verfahrensschritt S1 wird die Containerinstanz 11 auf einem ersten Gastrechner, beispielsweise dem Gastrechner 13, der Sicherheitsfunktionen entsprechend einer ersten Sicherheitsstufe umfasst, durch die Orchestrierungseinrichtung 16 gestartet. Empfängt die Orchestrierungseinrichtung 16 eine Sicherheitsalarmmeldung umfassend mindestens einen Kritikalitätsparameter, der einen Sicherheitszustand der orchestrierten Umgebung 10 angibt, von der Überwachungseinrichtung 17, siehe Verfahrensschritt S2. Im Verfahrensschritt S3 ermittelt die Orchestrierungseinrichtung 16 einen von der ersten Sicherheitsstufe unterschiedliche zweite Sicherheitsstufe für die Containerinstanz 11 anhand einer Verlagerungsrichtlinie abhängig von dem Kritikalitätsparameter. Anschließend wird die Containerinstanz 11 durch die Orchestrierungseinrichtung 16 auf einen zweiten Gastrechner der orchestrierten Umgebung 10, der Sicherheitsfunktionen entsprechend der zweiten Sicherheitsstufe umfasst, beispielsweise Gastrechner 14 oder auch Gastrechner 12 verlagert, siehe Verfahrensschritt S4.

Fig. 3 zeigt eine beispielhafte Ausführungsform einer erfindungsgemäßen Sicherheitsalarmmeldung 20. Die Sicherheitsalarmmeldung umfasst einen Kopfbereich H in dem beispielsweise die Adressinformation der Orchestrierungseinrichtung enthalten ist. Neben sonstigen Sicherheitsparametern S umfasst die Sicherheitsalarmmeldung 20 einen Kritikalitätsparameter K, der wiederum aus mehr als einer Unterparametern K1, ..., Kn besteht.

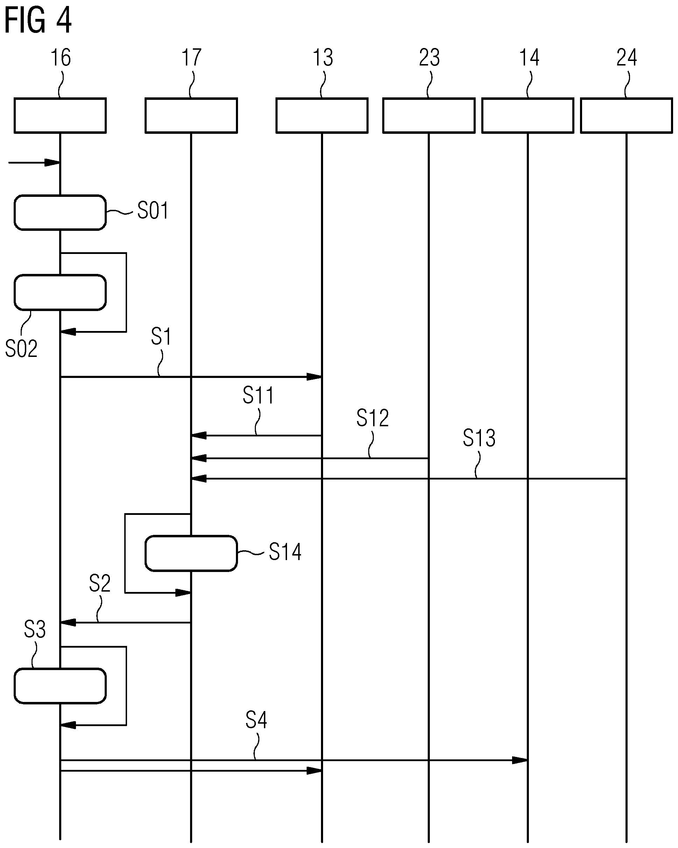

Ein beispielhafter Ablauf des Verfahrens wird nun detailliert anhand des Sequenzdiagramms in Fig. 4 beschrieben. Darin sind Komponenten, die eine Aktion ausführen, nebeneinander angeordnet. Dies sind die Orchestrierungseinrichtung 16, die Überwachungseinrichtung 17, der Gastrechner 23, der Sicherheitsfunktionen 33 entsprechend einer ersten Sicherheitsstufe umfasst und der Gastrechner 24, der Sicherheitsfunktionen 34 entsprechend einer zweiten Sicherheitsstufe umfasst. Einen zeitlichen Ablauf gibt die Lage der Aktionen in vertikaler Richtung an.

In einem ersten Schritt S01 empfängt die Orchestrierungseinrichtung 16 eine Bereitstellungsinformation und eine Verlagerungsrichtlinie. Die Bereitstellungsinformation umfasst unterschiedliche Parameter anhand derer die Orchestrierungseinrichtung 16 die Containerinstanz 11 auf dem Gastrechner einrichtet. Zusätzlich zu den üblichen Parametern enthält die Bereitstellungsrichtlinie nun die erste Sicherheitsstufe, die diejenige Sicherheitsstufe eines Gastrechners angibt, auf der die Containerinstanz 11 erstmals gestartet werden soll. Die erste Sicherheitsstufe wird in der Bereitstellungsinformation insbesondere durch einen Benutzer der Containerinstanz 11 vorgegeben. Der Benutzer ist insbesondere der Betreiber der SW-Anwendung oder des SW-Programms, das durch die Containerinstanz 11 ausgeführt wird. Dadurch kann der Benutzer vorgegeben, welche Sicherheitsstufe der Gastrechner haben soll, auf dem die Containerinstanz 11 erstmals gestartet werden sollen. Die Standard-Sicherheitsstufe kann auch von einem Administrator der orchestrierten Umgebung vorgegeben werden und diese z.B. namespace-bezogen sein.

Die erste Sicherheitsstufe ist als eine Standard-Sicherheitsstufe der Containerinstanz 11 in der Bereitstellungsinformation und/oder in der Verlagerungsrichtlinie zugeordnet. Mit Hilfe eines Labels wird dabei die Standard-Sicherheitsstufe zugewiesen. Eine beispielhafte Ausführungsform der Bereitstellungsinformation ist nachfolgend angegeben:
apiVersion: v1
kind: Po
metadata:
   name: security-context-demo
   labels:
      default-security-level: 2
spec:
   securityContext:
      runAsUser: 1000
      runAsGroup: 3000
   containers:
   - name: mycontainer-name
      image: debian:buster
      command: ["sh", "-c", "sleep 1h" ]
      securityContext:
         allowPrivilegeEscalation: false
         capabilities:
            drop: ["ALL"]

Die Orchestrierungseinrichtung 16 wählt einen ersten Gastrechner mit der angegebenen Standard-Sicherheitsstufe, hier Gastrechner 13 aus, siehe S02 und startet die Containerinstanz auf dem ersten Gastrechner, siehe S1.

Überwachungsnachrichten aller Komponenten werden zur Laufzeit von den Komponenten an die Überwachungseinrichtung 14 übertragen. So werden Überwachungsnachrichten von dem erste Gastrechner 13 einem dem ersten Gastrechner zugeordneten Sicherheitsfunktion 23 sowie von dem Gastrechner 14 aus der orchestrierten Umgebung 10 sowie eine dem Gastrechner 14 zugeordnete Sicherheitsfunktion 34 übermittelt, siehe S11, S12, S13. Des Weiteren übermittelt auch die Containerinstanz bzw. die containerisierten Anwendung Überwachungsnachrichten an die Überwachungsvorrichtung 17. Die Überwachungsvorrichtung 17 empfängt und korreliert diese Überwachungsnachrichten, siehe S14. Wird durch die Überwachungseinrichtung 17 ein sicherheitskritisches Ereignis identifiziert, erzeugt die Überwachungseinrichtung 17 eine Sicherheitsalarmmeldung und übermittelt diese an die Orchestrierungseinrichtung 16, siehe S2.

Die Sicherheitsalarmmeldung kann hierbei unterschiedliche Kritikalitätsparameter aufweisen. Der Kritikalitätsparameter wird abhängig von dem sicherheitskritischen Ereignis und einer Sicherheitsrichtlinie in der Überwachungseinrichtung 17 ermittelt. In einer Ausführungsvariante wird das sicherheitskritische Ereignis und/oder der Kritikalitätsparameter durch ein maschinelles Lernverfahren in der Überwachungseinrichtung 17 ermittelt. Das maschinelle Lernverfahren umfasst einen Algorithmus, der durch die Auswertung historischer Überwachungsnachrichten und bekannten daraus resultierenden Kritikalitätsparameter trainiert ist. Das maschinelle Lernverfahren kann kontinuierlich durch angepasst werden, indem beispielsweise ein durchschnittlicher Ressourcenverbrauch von Containerinstanzen über die Zeit hinweg ausgewertet wird und daraus Schwellwerte für eine Alarmierung dynamisch verändert werden. Der trainierte Algorithmus liefert aus aktuellen Überwachungsnachrichten einen Kritikalitätsparameter. Dadurch wird die Alarmierung automatisch anpasst.

Sind keine maschinellen Lernverfahren vorhanden, können die Schwellwerte für die Verlagerung manuell angepasst werden. Alternativ werden die Schwellwerte für die Kritikalität der Überwachungsnachrichten in der Verlagerungsrichtline angepasst. Beispielsweise wird nicht mehr beim Schwellwert 70% die Containerinstanz verlagert, sondern erst bei 80% bei einem Alarm. Sofern händische Anpassungen der Verlagerungsrichtlinie erforderlich sind, können diese zur Laufzeit erfolgen, sodass nicht zwingend für ein verändertes Verlagerungsverhalten Anpassungen in der Orchestrierungseinrichtung 16 erforderlich sind. Dies ist insbesondere von Vorteil, wenn die Orchestrierungseinrichtung 16 umgebaut, bspw. erweitert wird.

Innerhalb der Verlagerungsrichtlinie wird definiert, bei welchem Kritikalitätsparameter eine Containerinstanz oder alle Containerinstanzen einer Anwendung und für welchen Zeitraum verlagert wird. Des Weiteren kann ein Eintrag in der Verlagerungsrichtlinie definieren, dass sämtliche Containerinstanzen eines bestimmten Typs für einen definierten Zeitraum nicht mehr auf einem bestimmten Gastrechner oder nicht mehr auf einem Gastrechner mit einer niedrigen Sicherheitsstufe laufen dürfen und eine Verlagerung auf einen Gastrechner mit einer höheren Sicherheitsstufe erfolgen soll. Die Verlagerungsrichtlinie umfasst für jeden Kritikalitätsparameter mindestens eine der folgenden Angaben:
- mindestens eine Containerinstanz und/oder mindestens ein Containerinstanz-Typ und/oder eine Container-basierte Anwendung, die verlagert werden,
- mindestens eine erlaubte zweite Sicherheitsstufe oder mindestens eine nicht-erlaubte zweite Sicherheitsstufe, die der zweite Gastrechner aufweisen muss.

Nach einem Abgleich der Sicherheitsalarmmeldung mit der Verlagerungsrichtlinie und dem Ermitteln einer zweiten Sicherheitsstufe in der Orchestrierungseinrichtung 16, siehe S3 verlagert diese die Containerinstanz und/oder weitere Containerinstanzen auf einen zweiten Gastrechner, der Sicherheitsfunktionen entsprechend der ermittelten zweiten Sicherheitsstufe aufweist. In dem in Fig. 4 dargestellten Beispiel startet die Orchestrierungseinrichtung 16 die Containerinstanz auf dem Gastrechner 14 und stoppt die Containerinstanz auf dem ersten Gastrechner, hier Gastrechner 13.

In einem Ausführungsbeispiel umfasst die Verlagerungsrichtlinie für jeden Kritikalitätsparameter eine Zeitdauer, nach deren Ablauf die mindestens eine Containerinstanz vom zweiten Gastrechner auf einen Gastrechner mit der Standard-Sicherheitsstufe zurückverlagert wird oder auf einen Gastrechner mit einer in der Verlagerungsrichtlinie angegebenen dritten Sicherheitsstufe verlagert wird. Dabei wird die Zeitspanne bei einem Empfangen einer weiteren Sicherheitsalarmmeldung abhängig von einem in der weiteren Sicherheitsalarmmeldung enthaltenen weiteren Kritikalitätsparameter angepasst. Die Orchestrierungseinrichtung 16 überwacht hierbei selbständig die definierte Zeitdauer und leitet die Verlagerung nach Ablauf der Zeitdauer ein.

Alternativ ist auch eine Event-gesteuerte Verlagerung möglich. Bei dieser Variante verbleibt die Containerinstanz so lange auf einem zweiten Gastrechner, beispielsweise mit höherer Sicherheitsstufe, bis ein vordefiniertes Sicherheitsereignis dem Orchestrierungseinrichtung 16 mitteilt, dass der kritische Zustand nicht mehr gegeben ist und die Containerinstanz wieder auf die geringer gesicherten Gastrechner verlagert werden kann. In dieser Ausführungsvariante wird die mindestens eine Containerinstanz vom zweiten Gastrechner auf einen Gastrechner mit der Standard-Sicherheitsstufe zurückverlagert, oder auf einen Gastrechner mit einer in der Verlagerungsrichtlinie angegebenen dritten Sicherheitsstufe verlagert, wenn mindestens ein vordefiniertes Sicherheitsereignis in der Orchestrierungseinrichtung 16 empfangen wird.

Ein vordefiniertes Sicherheitsereignis, welches z.B. ein solches Signal erzeugen kann, ist beispielsweise ein Schwachstellenscanner, der lediglich auf höher gesicherten Gastrechnern zur Verfügung gestellt wird und einen Schwachstellenwert, beispielsweise ein sogenannter Vulnerability Score, an die Überwachungsvorrichtung 17 zurückliefert und dieses anschließend die Orchestrierungseinrichtung 16 informiert. Das mindestens eine vordefinierte Sicherheitsereignis ist ein Schwachstellenwert, der in der Überwachungseinrichtung von mindestens einer Sicherheitsfunktion des zweiten Gastrechners empfangen und an die Orchestrierungseinrichtung übermittelt wird.

Die Verlagerung der Containerinstanz erfolgt unterbrechungsfrei, indem ein Gastrechner-übergreifendes Prozessverlagerungsverfahren verwendet wird, das auch über Gastrechner hinweg erfolgen kann. Alternativ wird die Containerinstanz auf dem ersten Gastrechner 13, insbesondere auf einem weniger abgesicherten Gastrechner gestoppt wird und auf dem zweiten Gastrechner 14, insbesondere einem höhergesicherten Gastrechner durch die Orchestrierungseinrichtung 16 gestartet wird. In einem bevorzugten Ausführungsvariante ist die erste Sicherheitsstufe des ersten Gastrechners niedriger als die zweite Sicherheitsstufe des zweiten Gastrechners.

Für das Verfahren ist es notwendig, dass die Orchestrierungseinrichtung 16 der Überwachungseinrichtung 17 vertraut und die Überwachungseinrichtung 17 von den eingebundenen Komponenten vertrauenswürdige Informationen erhält.

Durch das Verfahren und die Vorrichtung können einzelne oder sämtliche Containerinstanzen eines Deployments, beispielsweise einer Anwendung, aufgrund eines Security-Events auf höher oder andersartig gesicherte Gastrechner temporär verlagert werden. Die Verlagerung der Containerinstanzen durch die Orchestrierungseinrichtung werden an die von der Überwachungseinrichtung erzeugten Ereignisse gekoppelt und bezieht sich nicht mehr nur auf den Neustart einer Containerinstanz bei Ausfall oder deren Skalierung bei Ressourcenknappheit. Die Verlagerung kann sowohl zeit- als auch eventgesteuert erfolgen. Um temporäre Security-Analysen zur Laufzeit durchführen zu können oder Containerinstanzen temporär einzuschränken muss nicht mehr händisch das Deployment zur Laufzeit angepasst werden. Die Instanz wird im Bedarfsfall automatisch auf eine höher gesicherte Knotengruppe verlagert.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur automatischen, sicherheitsbedingten Verlagerung mindestens einer Containerinstanz (11) in einer orchestrierten Umgebung (10), die mehr als einen, von einer Orchestrierungseinrichtung (16) verwalteten Gastrechner aufweist, umfassend die Schritte
- Starten (S1) der Containerinstanz (11) auf einem ersten Gastrechner, der Sicherheitsfunktionen entsprechend einer ersten Sicherheitsstufe umfasst, durch die Orchestrierungseinrichtung (16),
- Empfangen (S2) einer Sicherheitsalarmmeldung (20) umfassend mindestens einen Kritikalitätsparameter (K), der einen Sicherheitszustand der orchestrierten Umgebung (10) angibt, von einer Überwachungseinrichtung (17) in der Orchestrierungseinrichtung (16),
- Ermitteln (S3) einer von der ersten Sicherheitsstufe unterschiedlichen zweiten Sicherheitsstufe für die Containerinstanz (11) anhand einer Verlagerungsrichtlinie abhängig von dem Kritikalitätsparameter (K) durch die Orchestrierungseinrichtung (16),
- Verlagern (S4) der Containerinstanz (11) auf einen zweiten Gastrechner der orchestrierten Umgebung, der Sicherheitsfunktionen entsprechend der zweiten Sicherheitsstufe umfasst durch die Orchestrierungseinrichtung (16).

2. Verfahren nach Anspruch 1, wobei die erste Sicherheitsstufe als eine Standard-Sicherheitsstufe der Containerinstanz (11) in der Verlagerungsrichtlinie und/oder in einer Bereitstellungsinformation der Containerinstanz (11) zugeordnet ist.

3. Verfahren nach einem der vorangehenden Ansprüche, wobei die Sicherheitsalarmmeldung dann von der Überwachungseinrichtung (17) an die Orchestrierungseinrichtung (16) gesendet wird, wenn ein sicherheitskritisches Ereignis abhängig von mindestens einer Überwachungsnachricht, die von mindestens einem Gastrechner (12, 13, 14) der orchestrierten Umgebung (10) und/oder von der Containerinstanz (11) in der Überwachungseinrichtung (17) empfangen wird, identifiziert wird.

4. Verfahren nach Anspruch 3, wobei der Kritikalitätsparameter (K) abhängig von dem sicherheitskritischen Ereignis und einer Sicherheitsrichtlinie in der Überwachungseinrichtung (17) ermittelt wird.

5. Verfahren nach Anspruch 3 oder 4, wobei das sicherheitskritische Ereignis und/oder der Kritikalitätsparameter (K) durch ein maschinelles Lernverfahren ermittelt wird.

6. Verfahren nach einem der vorangehenden Ansprüche, wobei die Verlagerungsrichtlinie für jeden Kritikalitätsparameter (K) mindestens eine der folgenden Angaben umfasst:
- mindestens eine Containerinstanz und/oder mindestens ein Containerinstanz-Typ und/oder eine Container-basierte Anwendung, die verlagert werden,
- mindestens eine erlaubte zweite Sicherheitsstufe oder mindestens eine nicht-erlaubte zweite Sicherheitsstufe, die der zweite Gastrechner aufweisen muss.

7. Verfahren nach einem der vorangehenden Ansprüche, wobei die Verlagerungsrichtlinie für jeden Kritikalitätsparameter (K) eine Zeitdauer umfasst, nach deren Ablauf die mindestens eine Containerinstanz (11) vom zweiten Gastrechner auf einen Gastrechner mit der Standard-Sicherheitsstufe zurückverlagert wird oder auf einen Gastrechner mit einer in der Verlagerungsrichtlinie angegebenen dritten Sicherheitsstufe verlagert wird.

8. Verfahren nach Anspruch 7, wobei die Zeitspanne bei einem Empfangen einer weiteren Sicherheitsalarmmeldung abhängig von einem in der weiteren Sicherheitsalarmmeldung enthaltenen weiteren Kritikalitätsparameters angepasst wird.

9. Verfahren nach einem der Ansprüche 1-6, wobei nach Empfang von mindestens einem vordefinierten Sicherheitsereignis in der Orchestrierungseinrichtung (16), die mindestens eine Containerinstanz (11) vom zweiten Gastrechner auf einen Gastrechner mit der Standard-Sicherheitsstufe zurückverlagert wird oder auf einen Gastrechner mit einer in der Verlagerungsrichtlinie angegebenen dritten Sicherheitsstufe verlagert wird.

10. Verfahren nach Anspruch 9, wobei das mindestens eine vordefinierte Sicherheitsereignis ein Schwachstellenwert ist, der in der Überwachungseinrichtung (17) von mindestens einer Sicherheitsfunktion des zweiten Gastrechners empfangen und an die Orchestrierungseinrichtung (16) übermittelt wird.

11. Verfahren nach einem der vorangehenden Ansprüche, wobei das Verlagern der Containerinstanz (11) ein Stoppen der Containerinstanz auf dem ersten Gastrechner und anschließend ein Starten der Containerinstanz (11) auf dem zweiten Gastrechner umfasst.

12. Verfahren nach einem der Ansprüche 1 bis 10, wobei das Verlagern der Containerinstanz (11) unterbrechungsfrei durch ein Gastrechner-übergreifendes Prozessverlagerungsverfahren ausgeführt wird.

13. Vorrichtung zur automatischen, sicherheitsbedingten Verlagerung mindestens einer Containerinstanz (11) in einer orchestrierten Umgebung (10), die mehr als einen, von einer Orchestrierungseinrichtung (16) verwalteten Gastrechner aufweist, umfassend die Orchestrierungseinrichtung (16) und eine Überwachungseinrichtung (17), die derart ausgebildet sind die nachfolgenden Schritte auszuführen:
- Starten der Containerinstanz (11) auf einem ersten Gastrechner, der Sicherheitsfunktionen entsprechend einer ersten Sicherheitsstufe umfasst, durch die Orchestrierungseinrichtung (16),
- Empfangen einer Sicherheitsalarmmeldung umfassend mindestens einen Kritikalitätsparameter (K), der einen Sicherheitszustand der orchestrierten Umgebung (10) angibt, von einer Überwachungseinrichtung (17) in der Orchestrierungseinrichtung (16),
- Ermitteln einer von der ersten Sicherheitsstufe unterschiedlichen zweiten Sicherheitsstufe für die Containerinstanz (11) anhand einer Verlagerungsrichtlinie abhängig von dem Kritikalitätsparameter (K) durch die Orchestrierungseinrichtung (16), und
- Verlagern der Containerinstanz (11) auf einen zweiten Gastrechner der orchestrierten Umgebung (10), der Sicherheitsfunktionen entsprechend der zweiten Sicherheitsstufe umfasst durch die Orchestrierungseinrichtung (16).

14. Vorrichtung nach Anspruch 13, wobei die Orchestrierungseinrichtung (16) und die Überwachungseinrichtung (17) integriert ausgebildet sind oder wobei die Orchestrierungseinrichtung (16) und die Überwachungseinrichtung (17) als physisch getrennt ausgebildet sind, die über eine externe Kommunikationsverbindung (19) Sicherheitsalarmmeldungen und/oder Sicherheitsereignisse übermitteln.

15. Computerprogrammprodukt, umfassend ein nicht flüchtiges computerlesbares Medium, das direkt in einen Speicher eines digitalen Computers ladbar ist, umfassend Programmcodeteile, die bei Ausführung der Programmcodeteile durch den digitalen Computer diesen veranlassen, die Schritte des Verfahrens nach einem der Ansprüche 1 bis 12 durchzuführen.
